# EUROPEAN PATENT APPLICATION

(11) **EP 2 512 016 A1**
(43) Date of publication of application: **17.10.2012**
(21) Application number: 12164117.9
(22) Date of filing: 13.04.2012
(51) Int. Cl.: H02K 41/03, E05F 15/18

(54) **Guide for permanent-magnet linear actuators**

(30) Priority: 15.04.2011 IT PD20110124
(71) Applicant: Topp S.p.A. A Socio Unico, 36066 Sandrigo, VI (IT)
(72) Inventor: Cavalcante, Toni, 36031 DUEVILLE VI (IT)
(74) Representative: Modiano, Micaela Nadia

(57) **Abstract**

A guide (10) for a permanent-magnet linear actuator (11), of the type comprising a row of permanent magnets (12, 12a, 12b, 12c) which are arranged side by side and substantially parallel and equidistant.

The guide (10) is constituted by a series of modular elements (13, 14, 14a) which can be interconnected in the direction of extension of the guide with interlocking means for simplified fixing.

## Description

The present invention relates to a guide for permanent-magnet linear actuators.

In EPA 08850590.4 in the name of the same Applicant, a permanent-magnet linear actuator is described and claimed, **characterized in that** it comprises a moving part, to be coupled integrally to a first body adapted to be moved with respect to a second fixed body, and a fixed part, to be coupled integrally to the second body which is designed to remain substantially stationary, a first one of the two parts comprising guiding means for corresponding sliding means that are integral with the second part.

One of such parts, for example the moving part, has a series of first permanent magnets aligned in a row extending in the direction of translational motion and formed by the cooperation of the sliding means with the guiding means, the other one of the two parts having, facing toward the row of first permanent magnets, a rotor element comprising a series of second permanent magnets, which are supported by a shaft which is associated with means for its rotation, the second magnets being arranged laterally adjacent in the direction of the axis of the shaft, with polarities shifted out of phase by a preset angle.

The first moving part can for example be a flat guide that is designed to be fixed for example to a leaf of a door, or of a generic window or door, slideable, while the second part, fixed, can be a permanent magnet rotor as noted above, which is fixed inside a box-like containment body that is adapted to be fixed between the jambs of a door facing toward the flat guide with which the rotor is engaged by means of an adapted slide.

A permanent-magnet linear actuator as indicated above operates as described below.

By powering the electric motor that moves the permanent magnet rotor (the electric motor also being placed inside the box-like body that contains the permanent magnet rotor), the rotation of the rotor and the consequent translational movement of the guide are achieved as a result of the magnetic force exerted by the rotor on the row of permanent magnets set into the guide.

With the guide, naturally, the slideable door leaf on which the guide is fixed performs a translational motion.

By inverting the rotation of the rotor the movement in the opposite direction of the leaf of the sliding door is achieved.

A major problem that arose when providing such a linear actuator appeared to be that of providing each one of the door leaves of the sliding doors with which to associate such an actuator with a guide the length of which is proportional to the width of the door leaf, where often the dimensions of the door leaves are tailored and not standardized.

The aim of the present invention is to provide a guide for permanent-magnet linear actuators the length of which can easily be adapted to the width of the door leaf to which it is to be applied.

Within this aim, an object of the invention is to provide a guide that is easy to assemble and to mount.

Another object of the invention is to provide a guide that is compact and light, and at the same time robust and stable.

Another object of the invention is to provide a guide for permanent-magnet linear actuators that is structurally simple and easy to use, and which can be implemented at low cost.

This aim and these and other objects which will become more apparent hereinafter are achieved by a guide for permanent-magnet linear actuators, of the type comprising a row of permanent magnets which are arranged side by side and substantially parallel and equidistant, arranged along a direction which is oblique with respect to the axis of longitudinal extension of said guide, said guide being **characterized in that** it is constituted by a series of modular elements which can be interconnected in the direction of extension of said guide with interlocking means for simplified fixing.

Further characteristics and advantages of the invention will become more apparent from the description of a preferred, but not exclusive, embodiment of the guide for permanent-magnet linear actuators according to the invention, which is illustrated by way of non-limiting example in the accompanying drawings wherein:
- Figure 1 is a perspective view of a permanent-magnet linear actuator of which the guide according to the invention is part;
- Figure 2 is a sectional view of a door with a linear actuator and guide according to the invention as in Figure 1;
- Figure 3 is a front elevation view of a portion of the guide according to the invention;
- Figure 4 is an exploded perspective view of the guide according to the invention;
- Figure 5 is a sectional side view of the guide according to the invention with the associated actuator of which it is part;
- Figure 6 is a partially exploded perspective view of a detail of the guide according to the invention;
- Figure 7 is a different perspective view of the detail in Figure 6;
- Figure 8 is an example of application of the guide according to the invention to a door leaf of a sliding door.

With reference to the figures, a guide for a permanent-magnet linear actuator is generally designated with the reference numeral 10.

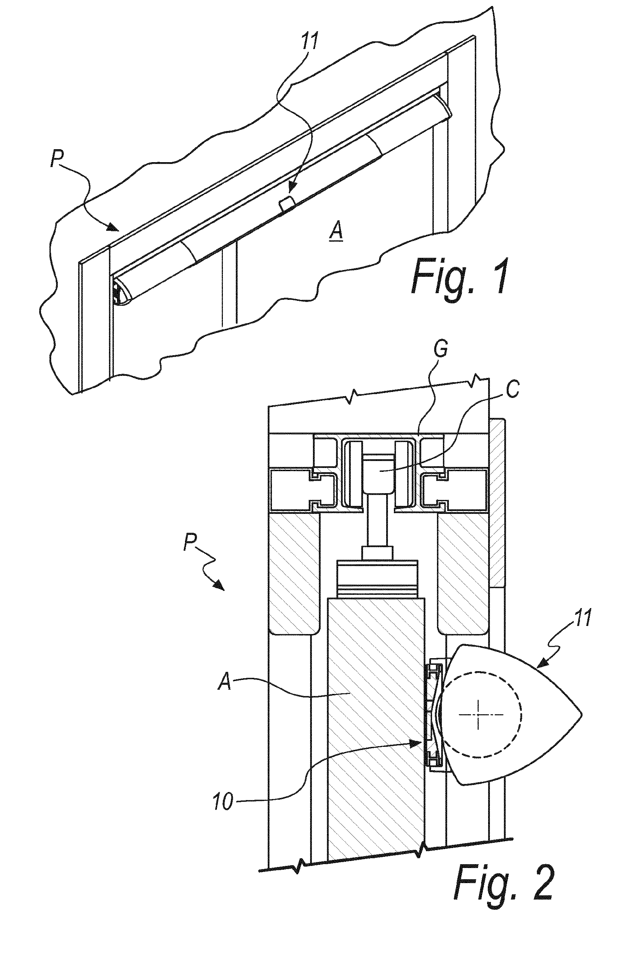

Figure 1 shows a generic permanent-magnet linear actuator 11, for the movement of a slideable door leaf A of a door P. Naturally the guide 10 and the corresponding linear actuator 11 are intended to be applied to door frames in general.
Figure 2 shows the guide 10 in cross-section, fixed to the slideable door leaf A, here shown for the purposes of example hung on an upper trolley C placed so as to slide inside a guiding profile G which in turn is fixed to a wall.

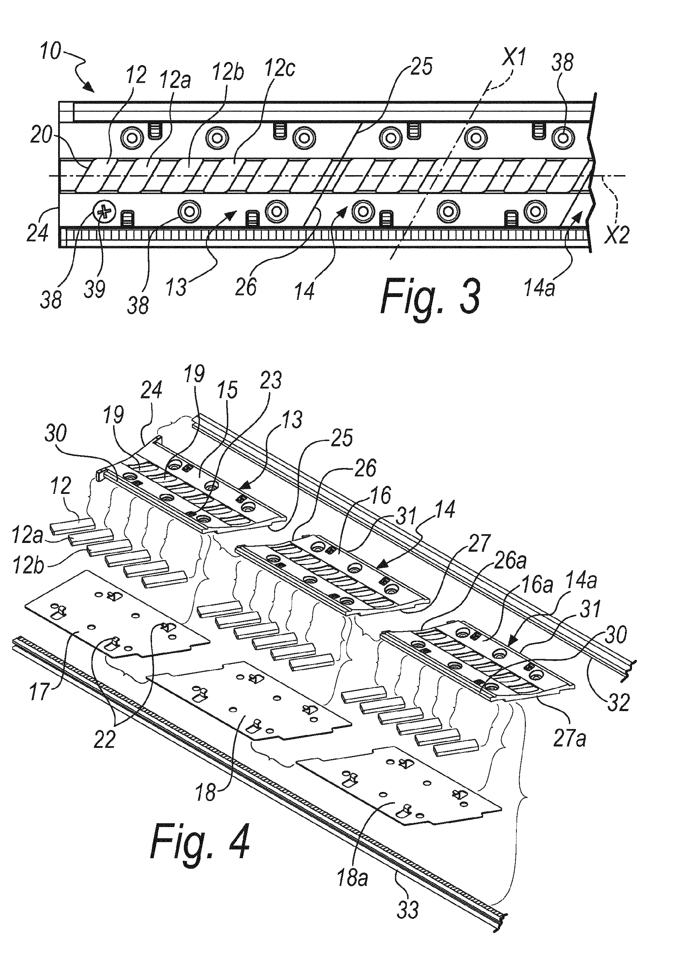

Figure 3 shows the guide 10 as comprising a row of permanent magnets which are arranged side by side and substantially parallel and equidistant, some of which by way of non-limiting example are numbered with 12, 12a, 12b, 12c, and described herein, by way of non-limiting example, as flat and shaped like parallelepipeds.

Each one of such permanent magnets is, for example, arranged along a direction X1 which is oblique with respect to the axis of longitudinal extension X2 of the guide.

The angle of inclination of the first direction X1 with respect to the second direction X2 is preferably, but not exclusively, 60°.

The guide 10, in Figure 3 and in Figure 4, is constituted by a series of modular elements 13, 14, 14a, each one of which supports a plurality of permanent magnets 12, 12a, 12b, 12c.

The modular elements 13, 14, 14a can be interconnected in the direction of extension of the guide with simplified fixing means, of the interlocking type, better described hereinbelow.

The modular elements 13, 14 et seq. are flat and comprise an upper plate, for example 15, 16 and 16a, and a lower plate 17, 18 and 18a in Figure 4.

When closed onto each other, the upper plates 15, 16 and 16a and corresponding lower plates 17, 18 and 18a define seats 19 et seq. for a corresponding number of corresponding permanent magnets 12 et seq.

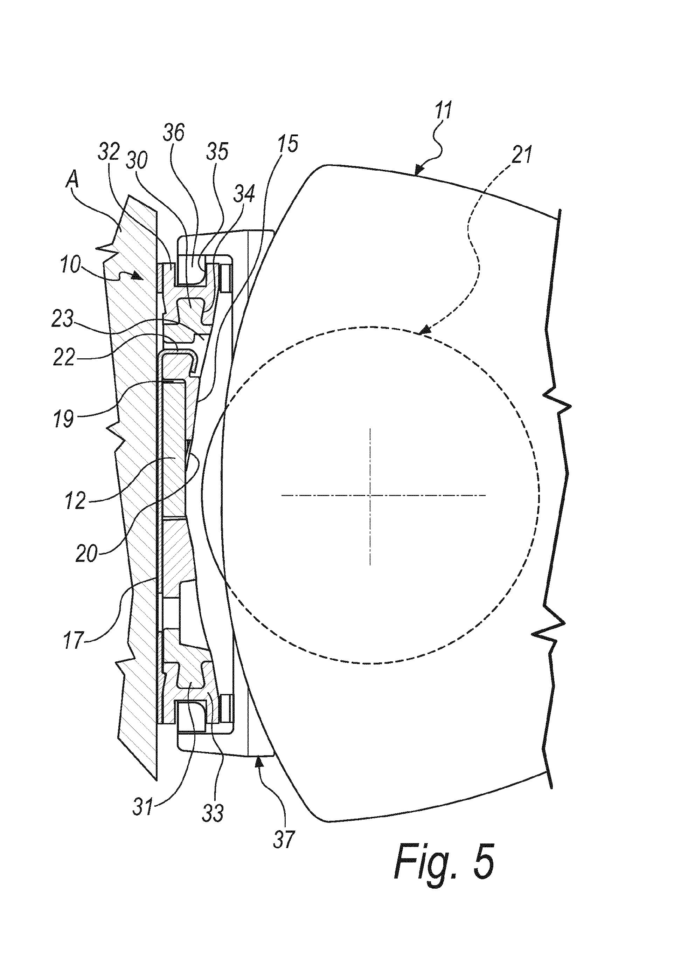

Preferably, the upper plate, 15, 16 and 16a has, for each permanent magnet 12 et seq., a corresponding opening 20, clearly visible in Figure 5, to allow the magnet 12 to face outward, available for interaction with a permanent-magnet rotor 21.

The upper plates 15 et seq., and lower plates 17 et seq., are interconnected with engagement means, which in the present embodiment are a plurality of engagement tabs 22, protruding from the lower plate, for example 17, and adapted to be inserted and then folded so as to engage by hooking in a corresponding seat 23 defined in the corresponding upper plate 15.

Alternatively, the engagement means are of the snap-fitting type, not shown for the sake of simplicity.

The assembly of the individual modular elements 13, 14 and 14a is thus easy and quickly performed, being necessary and sufficient to arrange the magnets 12 et seq. in the respective seats 19 in the upper plate 15 and then close the lower plate 17 on the upper plate 15, thus producing the locking of the magnets in the modular element.

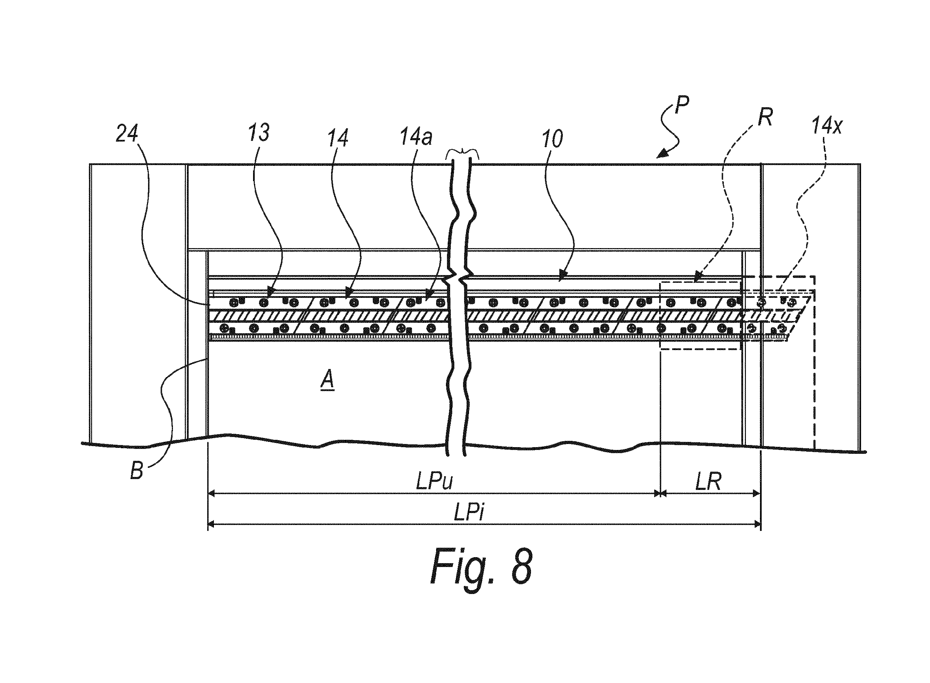

In the embodiment of the guide 10 according to the invention described herein by way of non-limiting example of the invention, a first modular element 13 of the modular elements is a terminal one, provided with a first substantially straight lateral edge 24 adapted to be arranged at a vertical edge B (see Figure 8) of a door leaf A to be moved in translation, and a second opposite lateral edge 25 for alignment, which is contoured to be juxtaposed with a complementarily shaped first lateral edge 26 of a second modular element 14, which is intermediate, the opposite second lateral edge 27 of the second modular element 14 being contoured to be juxtaposed with the first lateral edge 26a of an identical additional second modular element 14a.

The lateral alignment edges 25, 26, 27, 26a, 27a et seq. extend along a direction which is oblique with respect to the direction of the first lateral edge 24 of the first modular element 13.

The means for simplified fixing for the modular elements 13, 14, 14a comprise the lateral alignment edges 25, 26, 27, 26a, 27a, which have reversible mutual engagement means adapted to facilitate their assembly and disassembly.

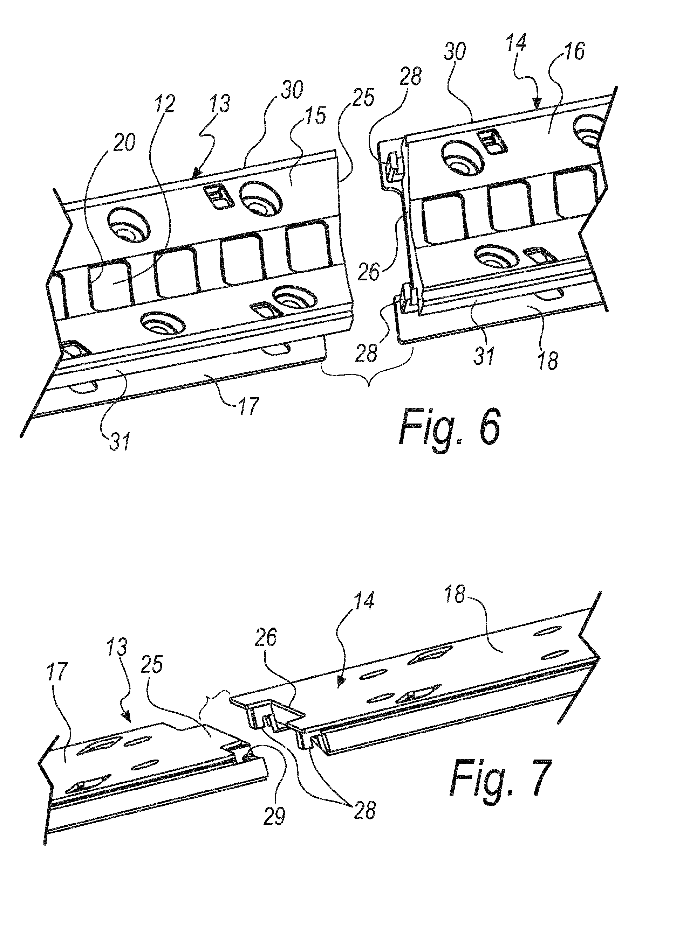

In the embodiment of the invention described herein, the reversible mutual engagement means are a pair of connecting teeth 28, clearly visible in Figures 6 and 7, protruding from the first edges 26 and 26a, which are designed to be inserted in corresponding engagement seats 29 provided on the corresponding second edges 25, 27 and 27a, so as to facilitate the subsequent stable fixing of the various modular elements.

The modular elements 13 and also 14 are provided with longitudinal edges 30 and 31, visible in Figures 5, 6 and 7, which are contoured for reversible engagement with a corresponding guiding profile 32 and 33. The longitudinal edges 30 and 31, together with the guiding profiles 32 and 33, are part of the simplified fixing means for the modular elements 13, 14 et seq.

Figure 5 shows how each one of the guiding profiles 32 and 33 has a substantially H-shaped cross-section, which defines a first channel 34 for engagement with corresponding longitudinal edges 30 or 31, and a second opposite channel 35 designed to accommodate the gliding portions 36 of a slider 37 which is associated with the rotor 21 of the linear actuator 11.

The first channel 34 has an internal sectional profile that is substantially dovetail-shaped, so as to prevent extraction in a transverse direction with respect to the longitudinal edge 30 or 31 that is inserted in it.

The modular elements 13 and 14 are provided with through holes 38 for provision for fixing to a door leaf A with screws 39.

The upper plates 15 and 16 are made of plastic material, and preferably technopolymer.

The lower plates 17 and 18 are made of metallic material, and preferably ductile iron.

The guiding profiles 32 and 33 are made of a material that can be cut easily, and is preferably aluminum.

The connection of the modular elements 13, 14 and 14a as assembled above is thus correspondingly easy and intuitive, where it is necessary and sufficient to engage the corresponding first edges of first modular elements with the second edges of the successive modular elements, and then transversely thread or insert the longitudinal edges 30 and 31, aligned, into the respective first channels 34 of the guiding profiles 32 and 33.

The guiding profiles 32 and 33 can be easily cut to size on site.

In Figure 8 the last modular element 14x arrives at the end of the door leaf A.

The door leaf of the door might however be shorter and in this case the modular element 14x would protrude. This apparent drawback is obviated by the fact that when the door leaf of the door is open, the width of the useful passage LPu is narrower than the full width LPi of the original passage, because of the presence of the rotor R of the linear actuator, and its length LR, since the rotor R must always "grip" a corresponding portion of the guide 10. Thus, since the width of the rotor LR substantially corresponds to the length of a modular element 14, 14a et seq., the length of the end portion of the last modular element 14x which might protrude cantilevered from the door leaf would still be less than or equal to the portion of the door leaf A that does not enter its slideaway side compartment, because the door leaf A always remains protruding from its slideaway side compartment for the length LR of the rotor R.

This prevents the end portion of the modular element 14x that might protrude from the edge of the door leaf A from interfering with the stroke limit wall inside the slideaway side compartment of the door.

If the guide 10 according to the invention is sold in the assembled state, it is correspondingly simple and intuitive to reduce its length to a desired length that corresponds to the width of the door leaf A to be moved, where it is sufficient to remove the excess modular elements from the guiding profiles 32 and 33, and subsequently cut the guiding profiles to measure, in order to adapt them to the overall length of the longitudinal edges of the joined modular elements.

The guide 10 is provided with holes for fixing with screws, but it can also be fixed to the door leaf by means of bi-adhesive strips, adhesives, and other systems that are similar and equivalent.

A guide 10 according to the invention can also be produced so as to be installable on curved door leaves.

In practice it has been found that the invention fully achieves the intended aim and objects.

In fact, with the invention a guide for permanent-magnet linear actuators is provided the length of which can easily be adapted to the width of the door leaf to which it is to be applied.

In addition, with the invention a guide is provided that is easy to assemble and to mount.

Moreover, with the invention a guide is provided that is compact and light, and at the same time robust and stable.

Last but not least, with the invention a guide for permanent-magnet linear actuators is provided that is structurally simple and easy to use, can be produced using known systems and techniques, and, no less important, at low cost.

The invention, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. PD2011A000124 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A guide (10) for a permanent-magnet linear actuator (11), of the type comprising a row of permanent magnets (12, 12a, 12b, 12c) which are arranged side by side and substantially parallel and equidistant, said guide (10) being **characterized in that** it is constituted by a series of modular elements (13, 14, 14a), each one of which supports a plurality of said permanent magnets (12, 12a, 12b, 12c), said modular elements being able to be interconnected in the direction of extension of said guide with simplified fixing means.

2. The guide according to claim 1, **characterized in that** said modular elements (13, 14, 14a) are flat and each one comprises an upper plate (15, 16, 16a) and a lower plate (17, 18, 18a), which, when closed onto each other, define seats (19) for a corresponding number of corresponding permanent magnets (12, 12a, 12b, 12c).

3. The guide according to claim 2, **characterized in that** at least one of said plates (15, 16, 16a, 17, 18, 18a) has, for each permanent magnet, a corresponding opening (20) to allow said permanent magnet to face outward.

4. The guide according to claim 2, **characterized in that** said upper plates (15, 16, 16a) and said lower plates (17, 18, 18a) are interconnected with engagement means.

5. The guide according to claim 1, **characterized in that** a first modular element (13) of said modular elements (13, 14, 14a) is a terminal one, provided with a first substantially straight lateral edge (24) adapted to be arranged at a vertical edge (B) of a door leaf (A) to be moved in translation, and a second opposite lateral edge (25) for alignment, which is contoured to be juxtaposed with a complementarily shaped first lateral edge (26) of a second modular element (14), which is intermediate, the opposite second lateral edge (27) of said second modular element (14) being contoured to be juxtaposed with the first lateral edge (26a) of an identical additional second modular element (14a).

6. The guide according to claim 5, **characterized in that** said simplified fixing means for said modular elements (13, 14, 14a) comprise said lateral alignment edges (25, 26, 27, 26a, 27a), which have reversible mutual engagement means adapted to facilitate their assembly and disassembly.

7. The guide according to claim 1, **characterized in that** said simplified fixing means for said modular elements (13, 14, 14a) comprise longitudinal edges (30, 31) of said modular elements (13, 14, 14a), said longitudinal edges being contoured for reversible engagement with a corresponding guiding profile (32, 33).

8. The guide according to claim 7, **characterized in that** each one of the guiding profiles (32, 33) has a substantially H-shaped cross-section, which defines a first channel (34) for engagement with corresponding longitudinal edges and a second opposite channel (35) designed to accommodate the gliding portions (36) of a slider (37) which is associated with the rotor (21) of the linear actuator (11).

9. The guide according to claim 8, **characterized in that** said first channel (34) has an internal sectional profile that is substantially dovetail-shaped.

10. The guide according to claim 1, **characterized in that** said modular elements have through holes (38) for provision for fixing with screws (39).

11. The guide according to claim 2, **characterized in that** said upper plates (15, 16, 16a) are made of plastic material, preferably of technopolymer.

12. The guide according to claim 2, **characterized in that** said lower plates (17, 18, 18a) are made of metallic material, preferably ductile iron.

13. The guide according to claim 1, **characterized in that** said permanent magnets (12, 12a, 12b, 12c) are substantially flat and shaped like parallelepipeds and each one is arranged along a direction which is oblique with respect to the axis of longitudinal extension of said guide.

14. The guide according to claim 7, **characterized in that** said guiding profiles (32, 33) are made of a material that can be cut easily, preferably aluminum.
